# EUROPEAN PATENT SPECIFICATION

(11) **EP 3 502 836 B1**
(45) Date of publication and mention of the grant of the patent: **08.09.2021**
(21) Application number: 17209334.6
(22) Date of filing: 21.12.2017
(51) Int. Cl.: G06F 3/01, G06F 3/0481, G06F 3/16, G06Q 10/00, G02B 27/01, G06T 19/00

(54) **METHOD FOR OPERATING AN AUGMENTED INTERACTIVE REALITY SYSTEM**
VERFAHREN ZUM BETREIBEN EINES ERWEITERTEN INTERAKTIVEN REALITÄTSSYSTEMS
PROCÉDÉ POUR FAIRE FONCTIONNER UN SYSTÈME DE RÉALITÉ INTERACTIVE AUGMENTÉE

(43) Date of publication of application: 26.06.2019
(73) Proprietor: Atos Information Technology GmbH, 81739 München (DE)
(72) Inventor: BIERHOFF, Thomas, 33106 Paderborn (DE); HORN, Andreas, 33102 Paderborn (DE); VRENKEN, Peter, 59227 Ahlen (DE)
(74) Representative: Argyma

(56) References cited:
- WO-A1-2007/066166
- WO-A1-2017/035033
- WO-A2-2012/107892
- US-A1- 2011 213 664
- US-A1- 2012 050 273
- US-A1- 2014 306 993

## Description

The present invention relates to a method for operating an augmented interactive reality system.

Augmented/Mixed reality based smart glass technologies (e.g. Microsoft HoloLens) represent a new emerging type of wearable computing devices which augment a user's physical environment digitally by adding two-dimensional and/or three-dimensional images projected through semi-transparent display technologies. It is expected that a size and a weight of smart glasses will decrease while their computing performance will further increase. This will boost a user acceptance of smart glass technologies. With this increased user acceptance and the ability to operate hands-free, smart glass technologies have the potential to replace tablets and smart phones in industrial business scenarios.

Field service business is a key-source of revenue for manufacturing industries. Any high value product being sold is most often accompanied by product support and maintenance in order to keep expensive down times of sold products low and prolong their lifetimes. Traditionally, field service is executed by field service experts which are travelling to client sites to maintain or repair machines. In a globalized market with large product portfolios in conjunction with sharp service level agreements, traditional field service becomes more and more outdated. Especially the lack of experienced field service experts in combination with an increasing complexity of connected smart products, forces the manufacturing industry to reinvent field operation business. Therefore, industries are founding local subsidiaries in different countries or subcontracting local suppliers to execute the field service. This decreases response times due to reduced travel times of remote experts and releases the pressure for more field service experts. However, this approach requires high financial invests as all the local field service workers must be trained well and provides high risks as qualified field service workers might leave for a better job opportunity quite often. In addition, the performance quality of field operation is declining as semi-skilled workers are not able to line up with the expertise of field service experts.

For this reason, new digitally transformed field service business approaches enter the stage, e.g. the Atos Remote Team Support Solution (ARTS) which is proven in several industrial operations of gas turbine field service business. Local field service workers are guided and supervised remotely by field service experts continuously or on demand. Therefore, the local field service workers are equipped with tablets, headsets and body cameras and can establish video conferencing sessions with remote field service experts located in a centralized remote expert office. The remote field service experts are able to track all activities of the local service workers in real time by having access to the body cameras. The experts can guide and supervise the local field service workers by chat and audio communication as well as shared video annotation. Furthermore, the experts can send additional documents, e.g. PDF documents, to the tablets of the local field workers to support them with additional information. The remote team support also provides a required communication infrastructure (tablets and software, body cameras, headsets, local mesh WiFi-networks, multilink gateways, satellite equipment, cloud infrastructures, etc.) to support an end to end business model of digitalized remote field support.

Document WO 2017/035033 A1 discloses a method for presenting an object by means of an interactive augmented reality desktop based on a spherical metaphor. The metaphor is intended to organize documents, files, applications and data displayed in sectors of the metaphor.

Document US 2014/0306993 A1 discloses methods for positioning virtual objects within an augmented reality environment using snap grid spaces associated with real-world environments, real-world objects and/or virtual objects within the the augmented reality environment.

Document US 2011/0213664 A1 discloses an interactive head-mountable eye-piece including an optical assembly through which a user views a surrounding environment and displayed content.

Document WO 2007/066166 A1 discloses a method to process and display control instructions and technical information for an equipment, plant or process in an industrial facility.

Document US 2012/0050273 A1 discloses a method for controlling a user interface by using information on a hand motion and a gaze of a user without separate tools such as a mouse and a keyboard.

Document WO 2012/107892 A2 discloses a method for gaze detection in a three-dimensional mapping environment.

An objective of the present invention is to provide an augmented interactive reality system for next generation local field workers based on glass technology. The system is interconnected with cloud-based IT enterprise systems, on premise IT systems as well as IoT (Internet of Things) controllers of smart machines and tools. Advantageously, the glass technology is able replace tablets, body cameras and headsets in field service business scenarios by a single glass device supporting hands-free operation and providing an augmented reality system for field service workers on industry grounds. Instead of using a limited video screen size of a touch device (e.g. tablet, smart phone, etc.) the mixed reality system will provide the possibility to superimpose images of applications with the physical environment of the user. All applications will deliver context-specific information and business functionality from various sources directly into a virtual field of view of the local field workers.

An objective of the present invention is to provide a method for operating an augmented interactive reality system. This objective is solved by a method for operating an augmented interactive reality system with the features of claim 1. Advantageous embodiments are specified in the dependent claims.

An augmented interactive reality system comprises a display unit comprising a projector module and an optical element. A method for operating an augmented interactive reality system comprises the following steps: A virtual surface is generated. An image is visualized by projecting the image on the optical element. The image is projected by the projector module. The image is visualized such that the image is attached to the virtual surface. Advantageously, the augmented interactive reality system provides a user interface which can be digitally populated with applications visualized as two-dimensional and/or three-dimensional images. For example, the images can provide business functionality for the user.

In an embodiment the optical element is semi-transparent. Advantageously, the image is superimposed with a physical environment of the user.

In an embodiment grid lines representing a location of the virtual surface are visualized.

In an embodiment the virtual surface comprises a vision region which is a portion of the virtual surface within which the image is visualized. Advantageously, the user can visualize only one image within the vision region while other images attached to the virtual surface remain invisible. Thus, he is able to focus on one application.

In an embodiment the display unit is moveable. In an embodiment the display unit is a head-mountable display unit, which in particular is designed as glasses. Advantageously, the user can move freely in his physical environment while operating the augmented interactive reality system.

In an embodiment a location and an orientation of the display unit in space is traced. The virtual surface is aligned continuously during a motion of the display unit. A position of the image on the virtual surface does not change during the alignment. Advantageously, an image visualized within the vision region will stay within the vision region when the display unit or the user wearing the display unit is in motion.

Gestures of a user are captured. A gaze of the user is captured. The image is selected when the gaze points at the image and a specified second gesture is captured. The selected image follows the gaze of the user. The selected image is attached to the virtual surface at a new position when a specified third gesture is captured.

In an embodiment the virtual surface is moved when a specified first gesture is captured.

Advantageously, the user can operate the augmented interactive reality system hands-free without using a standard input device like a mouse or another controller when gestures of the user and/or his gaze are captured.

In an embodiment a size of the virtual surface is changed by voice control or when a specified fourth gesture is captured. Advantageously, this enables a zooming function.

In an embodiment the virtual surface is spherically shaped. In an embodiment a centre of the spherically shaped virtual surface coincides with a centre of the display unit. Advantageously, a spherical virtual surface surrounding the user provides a well-arranged user interface.

The above-described properties, features and advantages of this invention and the way in which they are achieved will become clearer and more clearly understood in association with the following description of the exemplary embodiments explained in greater detail in association with the drawings. Here, in each case in schematic illustration:
Fig. 1: shows a box diagram of an augmented interactive reality system;
Fig. 2: shows the augmented interactive reality system and a user thereof.

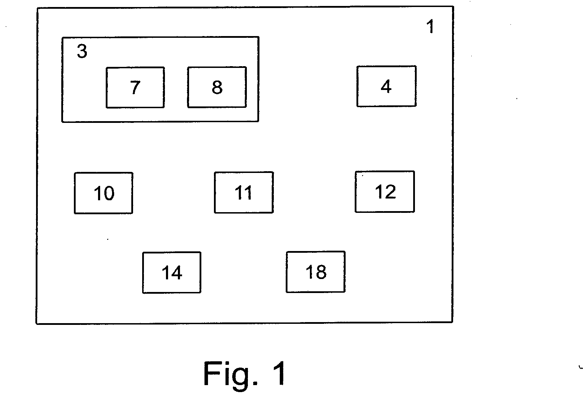

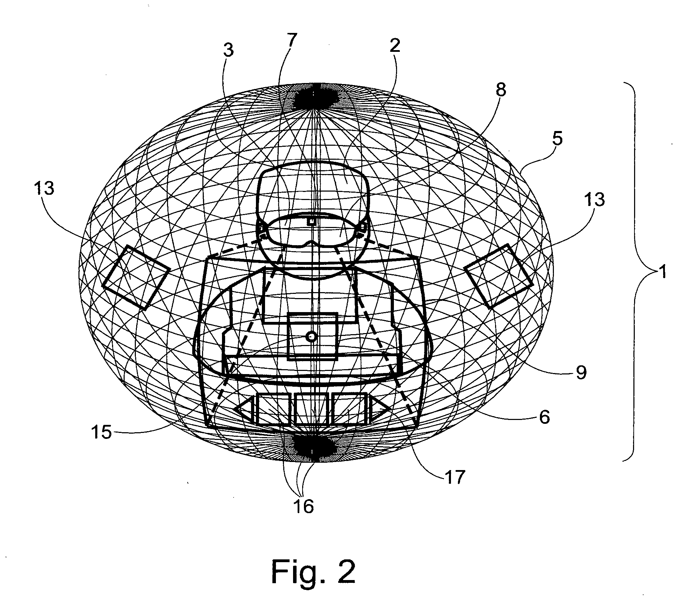

Fig. 1 shows a box diagram of an augmented interactive reality system 1. Fig. 2 schematically shows the augmented interactive reality system 1 and a user 2 operating the augmented interactive reality system 1. Apart from the user 2, all components shown in Fig. 2 belong to the augmented interactive reality system 1.

The augmented interactive reality system 1 comprises a display unit 3. The display unit 3 can be a head-mountable display unit 3, e.g. the display unit 3 can be designed as glasses as depicted in Fig. 2 where the user 2 is shown wearing the glasses. In this case, the display unit 3 is moveable as the user 2 is able to move freely. However, the display unit 3 may also be designed differently. E.g., the display unit 3 can be designed as a non-portable or a non-wearable display unit 3 being arranged somewhere such that the user 2 has to stay at a fixed position in order to use the display unit 3.

The augmented interactive reality system 1 comprises a processing unit 4. In Fig. 2 the processing unit 4 is not shown as it is integrated into the display unit 3. However, the processing unit 4 does not have necessarily to be integrated into the display unit 3. The processing unit 4 is designed to generate a virtual surface 5. The virtual surface 5 is a mathematical model of a user interface. It is a conceptual construct which only is generated virtually by the processing unit 4. The virtual surface 5 can be described mathematically in space coordinates relative to the display unit 3. The processing unit 4 contains the mathematical description of the virtual surface 5. As an example, in Fig. 2 the virtual surface 5 has been processed as a sphere surrounding the user 2 virtually. A centre of the spherical virtual surface 5 coincides with a centre of the display unit 3. A reasonable radius of the spherically shaped virtual surface 5 can e.g. be 1m or 1.5m. However, the virtual surface 5 can comprise any shape and any size and can e.g. be a two-dimensional virtual surface 5.

The processing unit 4 is also designed to process an image 6. The display unit 3 is designed to visualize the image 6 processed by the processing unit 4 such that from a perspective of the user 2 of the augmented interactive reality system 1 using the display unit 3 the image 6 appears to be attached to the virtual surface 5.

In order to visualize the image 6, the display unit 3 comprises a projector module 7 and an optical element 8. The projector module 7 is designed to project the image 6 on the optical element 8. The projector module 7 comprises two projectors. Each projector comprises a display, e.g. a liquid crystal display, and a collimator. Two projectors are necessary in order to provide a three-dimensional image 6 by means of stereoscopy. However, one projector can be omitted if only a two-dimensional image 6 shall be visualized.

The optical element 8 is designed to provide a visualization of the projected image 6. This can be achieved by using optical combiners. The optical element 8 comprises two optical combiners. Again, two optical combiners are necessary to provide a three-dimensional image 6 stereoscopically so that one optical combiner may be omitted when only a two-dimensional image 6 shall be visualized. The optical combiners redirect the projected image 6 to the user's 2 eyes. Any optical combiners may be used, e.g. waveguide combiners.

The optical element 8 and the optical combiners are semi-transparent. Thus, the optical combiners combine incident ambient light transmitted through the optical element 8 and light projected by the projector module 7. In this way, the image 6 is superimposed with a physical environment of the user 2 and an augmented or mixed reality is created for the user 2. However, the optical element 8 and the optical combiners do not necessarily have to be semi-transparent. If the optical element 8 and the optical combiners are not semi-transparent, a virtual reality will be created for the user 2, as the image 6 is not superimposed with the physical environment of the user 2.

The virtual surface 5 comprises a vision region 9. The vision region 9 is a portion of the virtual surface 5. The image 6 is only visualized within the vision region 9. The vision region 9 can also be called virtual field of view. A size of the vision region 9 is limited and depends on the optical element 8 and the optical combiners used for the display unit 3. For example, the size of the vision region 9 of the spherically shaped virtual surface 5 can be given by a meridian angle of 50° and a wide angle of 50°.

As the image 6 can only be visualized within the vision region 9, the virtual surface 5 itself also can only be depicted within the vision region 9. The virtual surface 5 can be depicted by visualizing grid lines representing a location of the virtual surface 5. The virtual surface 5 can also be depicted as a gleaming, semi-transparent surface. However, depicting the virtual surface 5 could distract the user 2 during work or movement. For this reason, the virtual surface 5 may only be depicted when the user 2 is not moving.

The augmented interactive reality system 1 comprises means to trace a location and an orientation of the display unit 3. For example, the augmented interactive reality system 1 comprises a camera system 10 designed to scan the physical environment of the user 2 and a rendering engine 11 designed to evaluate the location and the orientation of the display unit 3. Alternatively, the augmented interactive reality system 1 may comprise sensors 12, e.g. acceleration sensors and gyro sensors, in order to trace the location and the orientation of the display unit 3. The camera system 10, the rendering engine 11 and the sensors 12 are not shown in Fig. 2 as they are built in into the display unit 3. However, the camera system 10 and the rendering engine 11 have not necessarily to be built in into the display unit 3.

Once the display unit 3 is in motion due to a motion of the user 2 or due to a head movement of the user 2, the virtual surface 5 is continuously aligned such that a position of the image 6 on the virtual surface 5 does not change during the alignment. This can be achieved by using transformation matrices or transformation quaternions evaluated by the rendering engine 11 according to scanning results from the camera system 10 or according to measurements of the sensors 12. The processing unit 4 will request the transformation matrices or transformation quaternions from the rendering engine 11 and perform a transformation of the virtual surface 5 and the image 6 such that the position of the image 6 does not change.

The processing unit 4 can also process a plurality of images 6, 13 simultaneously. As an example, in Fig. 2 three images 6, 13 are shown. One image 6 is visualized within the vision region 9. The other two images 13 are processed such that they are attached to the virtual surface 5 outside the vision region 9. The images 13 being attached to the virtual surface 5 outside the vision region 9 are not visualized. By processing a plurality of images 6, 13, the physical environment of the user 2 can be filled up digitally. However, as the virtual surface 5 and the images 6, 13 are continuously transformed during motion of the display unit 3, only the image 6 attached to the virtual surface 5 within the vision region 9 is visualized during motion whereas the images 13 attached to the virtual surface 9 outside the vision region 9 are not visualized during motion. A number of images 6, 13 being placed in the physical environment, their spatial extensions and a resolution of the images 6, 13 is limited by an amount of memory and computing power being provided by the augmented interactive reality system 1.

In order to visualize an image 13 attached to the virtual surface 5 outside the vision region 9, the image 13 has to be moved into the vision region 9. For this purpose, the user 2 has the possibility to rotate the spherical virtual surface 5 around its centre or generally speaking to move the virtual surface 5. In order to move the virtual surface 5, the user 2 can perform a gesture triggering the movement of the virtual surface 5. Therefor, the camera system 10 is designed to capture gestures of the user 2. If the user 2 performs a specified first gesture, the camera system 10 will capture the specified first gesture while the rendering engine 11 will determine a transformation based on the specified first gesture. The transformation can be represented as a quaternion or a transformation matrix of the specified first gesture, which e.g. can be a drag gesture the user 2 can perform with his fingers or hands. The transformation can be calculated by using an initial vector corresponding to a starting point of the drag gesture and a final vector corresponding to an end position of the drag gesture and determining a difference between the initial vector and the final vector. The processing unit 4 will perform the transformation continuously according to the determination of the rendering engine 11. The movement of the virtual surface 5 in a direction of the drag gesture is activated once the user 2 starts the drag gesture on an unoccupied region of the virtual surface 5. The unoccupied region of the virtual surface 5 does not comprise any attached images 6, 13. If the virtual surface 5 is a sphere, it starts to rotate around its centre upon performing the drag gesture. Thus, an image 13 attached to the virtual surface 5 outside the vision region 9 can be brought into the vision region 9 where it is visualized.

The user 2 can also use the specified first gesture and the continuous alignment of the virtual surface 5 during the movement of the display unit 3 to move an image 13 attached to the virtual surface 5 outside the vision region 9 into the vision region 9 by performing the drag gesture and rotating his head. This can be a more intuitive way of moving an image 13 into the vision region 9. As gesture interaction is performed in real time, the user 2 gets an immediate feedback to his gesture based interactions.

The user 2 can also move an image 6, 13 along the virtual surface 5. That means he is able to attach an image 6, 13 at a new position on the virtual surface 5. To move an image 6, 13 along the virtual surface 5, the user 2 rotates the virtual surface 5 such that the vision region 9 coincides with an unoccupied region of the virtual surface 5. In a next step, the user 2 activates a configuration mode of the augmented interactive reality system 1. The activation of the configuration mode may be activated by any specific user control. E.g. the augmented interactive reality system 1 may comprise a microphone 18 which can be integrated into the display unit 3 which is not shown in Fig. 2. The microphone 18 records a voice of the user 2. Thus, the user 2 may activate the configuration mode by voice control. Once the configuration mode is activated, the virtual surface 5 is frozen which means that a continuous alignment of the virtual surface 5 during a motion of the display unit 3 is stopped. To move an image 6, 13 along the virtual surface 5, the user 2 has to select an image 6, 13. Selection of an image 6, 13 can be performed by gazing at the image 6, 13 and a specified second gesture. This is achieved by using a gaze evaluation 14 module of the augmented interactive reality system 1 which can be integrated into the display unit 3, which is also not shown in Fig. 2, capturing a gaze 15 of the user 2. The specified second gesture can be a tap gesture. After gazing at the image 6, 13 and performing the tap gesture, the image 6, 13 follows the gaze 15 of the user 2. Once the user 2 performs a specified third gesture which also can be a tap gesture, the image 6, 13 is attached to the virtual surface 5 at the new position, wherein the new position is given by a position of the gaze 15 of the user 2 in the moment he performs the specified third gesture.

Apart from moving an image 6, 13 along the virtual surface 5, the user 2 can also populate the virtual surface 5 with a further image 16. When the user 2 activates the configuration mode, an application menu 17 is shown within the vision region 9. The application menu 17 comprises further images 16 which are not attached to the virtual surface 5. The user 2 can select a further image 16 by gazing at the further image 16 and performing the specified second gesture. The further image 16 follows the gaze 15 of the user 2. The further image 16 can be attached to the virtual surface 5 by the specified third gesture. Again, a position of the further image 16 on the virtual surface 5 is given by the position of the gaze 15 of the user 2 in the moment he performs the specified third gesture.

The user 2 can adjust a size of the virtual surface 5. This operation is equivalent to a zooming operation. Adjusting the size of the virtual surface 5 e.g. when a specified fourth gesture is captured, which can be an arbitrary gesture predefined by the user 2, or voice control.

The user 2 has also the possibility to step outside the spherically shaped virtual surface 5 and observe the virtual surface 5 and images 6, 13, 16 attached to the virtual surface 5. He can also activate a rotation mode to observe the virtual surface 5 during rotation. Again specified gestures or voice control may be used to step outside the virtual surface 5 or to activate the rotation mode.

In general, all interactions between the user 2 and the augmented interactive reality system 1 can also be performed using a standard input device like a mouse, a keyboard, a touch display or a controller. That means that, in embodiments outside the scope of the claimed invention, capturing of gestures and capturing of the gaze of the user 2 can be omitted. However, an interaction based solely on finger/hand gestures and gaze evaluation is advantageous as the user 2 can operate more freely when not using standard input devices.

The user 2 of the augmented interactive reality system 1 can be a worker executing field service at a remote industrial site, e.g. the user 2 could maintain or repair machines of a client. The user 2 might have to execute a complex service operation procedure in which he has not sufficient experience or knowledge. Traditionally, the user 2 would use some paper based documentation, e.g. check lists for executing field service. Eventually, he has to call an expert or even has to travel back without executing field service. To prevent such a scenario, an improper service execution or longer downtimes of machines due to long planning and preparation periods, the user 2 can be supplied with field service relevant information via the augmented interactive reality system 1. The augmented interactive reality system 1 provides the possibility for remote team work or support. The user 2 can obtain documents from an experienced field service expert who guides, instructs and supervises the user 2. For example, the field service expert could provide field service relevant PDF documents. The PDF documents can be attached to the virtual surface 5 as images 6, 13, 16. Apart from documents, the field service expert could also establish a video or an audio collaboration session. The video can also be attached to the surface as an image 6, 13, 16. In this case, more precisely, the video consists of a sequence of images 6, 13, 16 attached to the virtual surface 5. The user 2 has also the possibility to share his field of view with the expert by sharing a field of view of the camera system scanning the physical environment of the user 2.

The user 2 could also have to execute a complex and safety critical operation at a machine. Therefore, he can start a twin application which provides him with an interactive digital twin of the machine visualized by the display unit 3 which enables him to simulate each single step of the service operation procedure in advance. The digital twin might also be interconnected with the machine under service which e.g. can provide real time sensor data to the user 2.

The field service expert can also use the augmented interactive reality system 1. The user 2 and the expert could e.g. share the digital twin. A further possibility is that the expert is able to get access to a machine the user 2 has to maintain or repair. Remote access can be achieved by a digital control panel supporting access to machine data. The digital control panel can be visualized in the vision region 9 of the expert's virtual surface 5. Thus, the expert and the user 2 are able to execute first diagnostics and find solutions together.

The augmented interactive reality system 1 is interlinked with distributed IT services like cloud-based IT enterprise systems, on premise IT systems as well as IoT (Internet of Things) controllers of smart machines and tools providing the user 2 with business functionality.

The user 2 is able to turn off the augmented interactive reality system 1 as it might distract him from field service operation. The user 2 has also the possibility to detach images 6, 13, 16 from the virtual surface 5 and place the images 6, 13, 16 somewhere else. For example, the user 2 could attach the images 6, 13, 16 to corresponding machines. This could be expedient when the user 2 has to focus on a certain machine. The images 6, 13, 16 corresponding to the machine he has to focus on could stay attached to the virtual surface 5, while other images 6, 13, 16 could be attached to their corresponding machines, respectively. Thus, the user 2 can organize his work place.

The invention has been illustrated and described in more specific detail on the basis of the preferred exemplary embodiments. Nevertheless, the invention is not restricted to the examples disclosed. Rather, other variations can be derived therefrom by the person skilled in the art, without departing from the scope of protection of the invention as defined by the claims.

## Claims

1. A method for operating an augmented interactive reality system (1) comprising a display unit (3) comprising a projector module (7) and an optical element (8), wherein the method comprises the following steps:
- generating a virtual surface (5), wherein the virtual surface (5) is a mathematical model of a user interface relative to the display unit (3),
- visualizing an image (6, 13, 16) by projecting the image (6, 13, 16) on the optical element (8), wherein the image (6, 13, 16) is projected by the projector module (7), wherein the image (6, 13, 16) is visualized such that the image (6, 13, 16) is attached to the virtual surface (5),
- capturing gestures of a user (2) of the augmented interactive reality system (1),
- capturing a gaze (15) of the user (2),
- selecting the image (6, 3, 16), wherein the image (6, 13, 16) is selected when the gaze (15) points at the image (6, 13, 16) and a specified first gesture is captured,
**characterized in that** the selected image (6, 13, 16) follows the gaze (15) of the user (2), wherein the selected image (6, 13, 16) is attached to the virtual surface (5) at a new position when a specified second gesture is captured.

2. The method as claimed in claim 1,
wherein the optical element (8) is semi-transparent.

3. The method as claimed in one of the previous claims,
wherein grid lines representing a location of the virtual surface (5) are visualized.

4. The method as claimed in one of the previous claims,
wherein the virtual surface (5) comprises a vision region (9) which is the portion of the virtual surface (5) within which the image (6, 13, 16) can be visualised by said projecting.

5. The method as claimed in one of the previous claims,
wherein the display unit (3) is moveable.

6. The method as claimed in one of the previous claims,
wherein the display unit (3) is a head-mountable display unit, which in particular is designed as glasses.

7. The method as claimed in claim 4 and one of the claims 5 or 6,
wherein a location and an orientation of the display unit (3) in space is traced,
wherein the virtual surface (5) is aligned continuously during a motion of the display unit (3), wherein a position of the image (6, 13, 16) on the virtual surface (5) does not change during the alignment.

8. The method as claimed in one of the previous claims,
wherein the virtual surface (5) is moved when a specified third gesture is captured.

9. The method as claimed in one of the previous claims,
wherein a size of the virtual surface (5) is changed by voice control or when a specified fourth gesture is captured.

10. The method as claimed in one of the previous claims,
wherein the virtual surface (5) is spherically shaped.

11. The method as claimed in claim 10,
wherein a centre of the spherically shaped virtual surface (5) coincides with a centre of the display unit (3).

## Patentansprüche

1. Verfahren zum Betreiben eines Systems für erweiterte interaktive Realität (1), das eine Anzeigeeinheit (3) umfasst, die ein Projektormodul (7) und ein optisches Element (8) umfasst, wobei das Verfahren die folgenden Schritte umfasst:
- Erzeugen einer virtuellen Oberfläche (5), wobei die virtuelle Oberfläche (5) ein mathematisches Modell einer Benutzerschnittstelle relativ zu der Anzeigeeinheit (3) ist,
- Visualisieren eines Bildes (6, 13, 16) durch Projizieren des Bildes (6, 13, 16) auf das optische Element (8), wobei das Bild (6, 13, 16) durch das Projektormodul (7) projiziert wird, wobei das Bild (6, 13, 16) derart visualisiert wird, dass das Bild (6, 13, 16) an der virtuellen Oberfläche (5) angebracht wird,
- Erfassen von Gesten eines Benutzers (2) des Systems für erweiterte interaktive Realität (1),
- Erfassen eines Blicks (15) des Benutzers (2),
- Auswählen des Bildes (6, 3, 16), wobei das Bild (6, 13, 16) ausgewählt wird, wenn der Blick (15) auf das Bild (6, 13, 16) zeigt und eine vorgegebene erste Geste erfasst wird, **dadurch gekennzeichnet, dass** das ausgewählte Bild (6, 13, 16) dem Blick (15) des Benutzers (2) folgt, wobei das ausgewählte Bild (6, 13, 16) an der virtuellen Oberfläche (5) an einer neuen Position angebracht wird, wenn eine vorgegebene zweite Geste erfasst wird.

2. Verfahren nach Anspruch 1,
wobei das optische Element (8) halbtransparent ist.

3. Verfahren nach einem der vorherigen Ansprüche, wobei Rasterlinien, die einen Ort der virtuellen Oberfläche (5) darstellen, visualisiert werden.

4. Verfahren nach einem der vorherigen Ansprüche, wobei die virtuelle Oberfläche (5) einen Sichtbereich (9) umfasst, welcher der Abschnitt der virtuellen Oberfläche (5) ist, innerhalb dessen das Bild (6, 13, 16) durch das Projizieren visualisierbar ist.

5. Verfahren nach einem der vorherigen Ansprüche, wobei die Anzeigeeinheit (3) bewegbar ist.

6. Verfahren nach einem der vorherigen Ansprüche, wobei die Anzeigeeinheit (3) eine kopfmontierbare Anzeigeeinheit ist, die insbesondere als Brille ausgebildet ist.

7. Verfahren nach Anspruch 4 und einem der Ansprüche 5 oder 6,
wobei ein Ort und eine Orientierung der Anzeigeeinheit (3) im Raum verfolgt werden, wobei die virtuelle Oberfläche (5) während einer Bewegung der Anzeigeeinheit (3) kontinuierlich ausgerichtet wird, wobei sich eine Position des Bildes (6, 13, 16) auf der virtuellen Oberfläche (5) während der Ausrichtung nicht ändert.

8. Verfahren nach einem der vorherigen Ansprüche,
wobei die virtuelle Oberfläche (5) bewegt wird, wenn eine vorgegebene dritte Geste erfasst wird.

9. Verfahren nach einem der vorherigen Ansprüche, wobei eine Größe der virtuellen Oberfläche (5) sprachgesteuert oder bei Erfassen einer vorgegebenen vierten Geste verändert wird.

10. Verfahren nach einem der vorherigen Ansprüche, wobei die virtuelle Oberfläche (5) sphärisch geformt ist.

11. Verfahren nach Anspruch 10,
wobei ein Mittelpunkt der sphärisch geformten virtuellen Oberfläche (5) mit einem Mittelpunkt der Anzeigeeinheit (3) zusammenfällt.

## Revendications

1. Procédé d'exploitation d'un système de réalité interactive augmentée (1) comprenant une unité d'affichage (3) comprenant un module de projecteur (7) et un élément optique (8), dans lequel le procédé comprend les étapes suivantes :
- générer une surface virtuelle (5), la surface virtuelle (5) étant un modèle mathématique d'une interface utilisateur par rapport à l'unité d'affichage (3),
- visualiser une image (6, 13, 16) en projetant l'image (6, 13, 16) sur l'élément optique (8), dans lequel l'image (6, 13, 16) est projetée par le module de projecteur (7), dans lequel l'image (6, 13, 16) est visualisée de telle sorte que l'image (6, 13, 16) est fixée à la surface virtuelle (5),
- capturer des gestes d'un utilisateur (2) du système de réalité interactive augmentée (1),
- capturer un regard (15) de l'utilisateur (2),
- sélectionner l'image (6, 3, 16), l'image (6, 13, 16) étant sélectionnée lorsque le regard (15) pointe vers l'image (6, 13, 16) et un premier geste spécifié est capturé,
**caractérisé en ce que** l'image sélectionnée (6, 13, 16) suit le regard (15) de l'utilisateur (2), l'image sélectionnée (6, 13, 16) étant fixée à la surface virtuelle (5) à une nouvelle position lorsqu'un deuxième geste spécifié est capturé.

2. Procédé selon la revendication 1,
dans lequel l'élément optique (8) est semi-transparent.

3. Procédé selon l'une des revendications précédentes, dans lequel des lignes de grille représentant un emplacement de la surface virtuelle (5) sont visualisées.

4. Procédé selon l'une des revendications précédentes, dans lequel la surface virtuelle (5) comprend une région de vision (9) qui est la partie de la surface virtuelle (5) au sein de laquelle l'image (6, 13, 16) peut être visualisée par ladite projection.

5. Procédé selon l'une des revendications précédentes, dans lequel l'unité d'affichage (3) est mobile.

6. Procédé selon l'une des revendications précédentes, dans lequel l'unité d'affichage (3) est une unité d'affichage pouvant être montée sur la tête, qui se présente notamment sous la forme de lunettes.

7. Procédé selon la revendication 4 et l'une des revendications 5 ou 6,
dans lequel un emplacement et une orientation de l'unité d'affichage (3) dans l'espace est tracé,
dans lequel la surface virtuelle (5) est alignée en continu pendant un mouvement de l'unité d'affichage (3), dans lequel une position de l'image (6, 13, 16) sur la surface virtuelle (5) ne change pas pendant l'alignement.

8. Procédé selon l'une des revendications précédentes,
dans lequel la surface virtuelle (5) est déplacée lorsqu'un troisième geste spécifié est capturé.

9. Procédé selon l'une des revendications précédentes, dans lequel une taille de la surface virtuelle (5) est changée par commande vocale ou lorsqu'un quatrième geste spécifié est capturé.

10. Procédé selon l'une des revendications précédentes, dans lequel la surface virtuelle (5) est de forme sphérique.

11. Procédé selon la revendication 10,
dans lequel un centre de la surface virtuelle de forme sphérique (5) coïncide avec un centre de l'unité d'affichage (3).
